# EUROPÄISCHE PATENTSCHRIFT

(11) **EP 2 819 079 B1**
(45) Veröffentlichungstag und Bekanntmachung des Hinweises auf die Patenterteilung: **06.11.2019**
(21) Anmeldenummer: 14163940.1
(22) Anmeldetag: 08.04.2014
(51) Int. Cl.: G06Q 20/32

(54) **Elektronisches Transaktionsverfahren und Computersystem**
Electronic transaction method and computer system
Procédé de transaction électronique et système informatique

(30) Priorität: 28.06.2013 DE 102013212636
(43) Veröffentlichungstag der Anmeldung: 31.12.2014
(73) Patentinhaber: Bundesdruckerei GmbH, 10958 Berlin (DE)
(72) Erfinder: Morgner, Frank, 15537 Grünheide (DE); Paeschke, Manfred, Dr., 16348 Wandlitz (DE); Dietrich, Frank, 12437 Berlin (DE); Schröder, Martin, 12437 Berlin (DE); Bastian, Paul, 10243 Berlin (DE); Kraus, Micha, 10827 Berlin (DE)
(74) Vertreter: Richardt Patentanwälte PartG mbB

(56) Entgegenhaltungen:
- DE-A1-102011 082 101
- DE-B3-102011 089 580

## Beschreibung

Die Erfindung betrifft ein elektronisches Transaktionsverfahren sowie ein Computersystem.

Für den elektronischen Handel, das heißt den sogenannten eCommerce, sind verschiedene Transaktionsverfahren bekannt. Dazu gehören übliche Zahlungsverfahren wie zum Beispiel eine papiergebundenen Überweisung oder die Zahlung per Nachnahme sowie elektronische Zahlungsverfahren, wie zum Beispiel Kreditkartenzahlung, die Zahlung per Online-Banking, Inkasso/Billing-Systeme, Factory-Systeme, elektronische Lastschrift, Prepaidverfahren, Zahlung per Telefonrechnung sowie Handy-Payment-Systeme. Solche Zahlungsverfahren werden zum Teil auch für eGovernment Anwendungen eingesetzt.

In der DE 10 2011 089 580 B3 ist beispielsweise ein Datenverarbeitungssystem sowie ein Verfahren gezeigt, die zur Durchführung solcher Transaktionen geeignet sind. Es wird ein ID-Token verwendet, der einen gesicherten Speicherbereich zur Speicherung zumindest eines für die Transaktion erforderlichen Attributs aufweist, um zu verhindern, dass das in dem Speicherbereich gespeicherte Attribut in unerlaubter Weise verändert oder ohne die dafür erforderliche Berechtigung ausgelesen wird

Der Erfindung liegt demgegenüber die Aufgabe zugrunde, ein verbessertes elektronisches Transaktionsverfahren sowie ein entsprechendes Computersystem zu schaffen.

Die der Erfindung zugrunde liegende Aufgabe wird jeweils mit den Merkmalen der unabhängigen Patentansprüche erfüllt. Ausführungsformen der Erfindung sind in den abhängigen Patentansprüchen angegeben.

Unter einer "Transaktion" wird hier eine finanzielle Transaktion, wie zum Beispiel die Bezahlung eines Bezahlbetrags durch Vornahme einer Überweisung, eines Lastschrifteinzugs oder Belastung einer Kreditkarte, ein Bestellvorgang zur Bestellung und Lieferung eines physischen Gutes oder von Daten sowie andere logistische, Handels- und/oder Finanztransaktionen verstanden.

Unter einer "Session" wird hier eine temporäre Kommunikationsverbindung, das heißt eine sog. Communication Session, verstanden, die sich gemäß OSI-Schichtmodell auf die Transportschicht ("transport layer") oder die Anwendungsschicht ("application layer") beziehen kann. Insbesondere kann es sich bei einer Session um eine http-Session oder um eine https-Session handeln, wobei bei letzterer der Transportlayer durch eine symmetrische oder asymmetrische Verschlüsselung geschützt ist.

Unter einem "ID-Token" wird hier insbesondere ein tragbares elektronisches Gerät verstanden, welches zumindest einen Datenspeicher zur Speicherung des zumindest einen Attributs und eine Kommunikations-Schnittstelle zum Auslesen des Attributs aufweist. Vorzugsweise hat der ID-Token einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Insbesondere kann ein solcher kryptografisch an ein Secure Element gebundener Softtoken gemäß DE 10 2011 082 101, erzeugt werden.

Unter einem "ID-Provider-Computersystem" wird hier ein Computersystem verstanden, welches dazu ausgebildet ist, zumindest ein Attribut aus dem ID-Token eines Nutzers auszulesen. Vorzugsweise wird das ID-Provider-Computersystem in einem sogenannten Trustcenter betrieben, um ein möglichst hohes Maß an Sicherheit zu schaffen.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem Dienst-Computersystem um einen Internetserver zur Verfügungstellung einer eCommerce- oder eGovernment-Anwendung handeln, insbesondere einen Onlineshop oder einen Behördenserver.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer, Safari, Google Chrome, Firefox oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Nach einer Ausführungsform der Erfindung handelt es sich bei der Anforderung, d.h. dem Request, des Dienst-Computersystems um einen SAML-Request und bei der Antwort, d.h. der Response, des ID-Provider-Computersystems hierauf um eine SAML-Response (vgl. Security Assertion Markup Language (SAML) V2.0 Technical Overview, OASIS, Committee Draft 02, 25. März 2008).

Nach Ausführungsformen der Erfindung wird der Request von dem Dienst-Computersystem über das Nutzer-Computersystem an das ID-Provider-Computersystem übertragen. Aufgrund des Empfangs des Request durch das Nutzer-Computersystem wird der weitere Ablauf zur Erzeugung der Response, einschließlich der Authentisierung des Nutzers und des ID-Provider-Computersystems, ausgelöst.

Nach einer Ausführungsform der Erfindung hat das ID-Provider-Computersystem ein Zertifikat, in dem die Leserechte für die Durchführung des Lesezugriffs spezifiziert sind.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Alternativ sind auch Zertifikate basierend auf zero-knowledge Kryptosystemen möglich. Beispielsweise kann das Zertifikat dem Standard X.509 oder einem anderen Standard entsprechen. Vorzugsweise handelt es sich bei dem Zertifikat um ein Card Verifiable Certificate (CVC).

In dem Zertifikat kann spezifiziert sein, für welches Attribut oder welche Attribute des Nutzers, die in dem geschützten Speicherbereich des ID-Tokens gespeichert sind, das ID-Provider-Computersystem zur Durchführung des Lesezugriffs berechtigt ist. Bei diesen Attributen kann es sich um persönliche Attribute des Nutzers handeln, wie zum Beispiel seinen Namen, Wohnort und sein Alter. Diese Attribute können in ihrer Kombination als Nutzererkennung verwendet werden, um auf die Bezahlinformation des registrierten Nutzers zuzugreifen.

Alternativ oder zusätzlich kann auch ein Pseudonym des Nutzers, welches zumindest temporär als Attribut des Nutzers von dem ID-Token gespeichert wird, als Nutzerkennung verwendet werden. Bei dem Pseudonym des Nutzers kann es sich um einen Identifikator handeln, welcher den Nutzer nur gegenüber dem anfragenden Dienst-Computersystem identifiziert, da der Identifikator von dem elektronischen Personalausweis aus dem privaten Schlüssel des Personalausweis und dem öffentlichen Schlüssel des anfragenden Dienst-Computersystems kryptografisch abgeleitet wird.

Ausführungsformen der Erfindung sind besonders vorteilhaft, da ein universell für eCommerce- und eGovernment-Anwendungen geeignetes computerimplementiertes Bezahlverfahren geschaffen wird, welches gleichzeitig flexibel, bequem in der Handhabung und sicher ist. Dies wird insbesondere dadurch ermöglicht, dass das Bezahlverfahren auf einem ID-Token basiert, wobei Voraussetzung für die Durchführung eines Bezahlvorgangs sowohl die Authentifizierung des Nutzers gegenüber dem ID-Token als auch die Authentifizierung des ID-Provider-Computersystems gegenüber dem ID-Token ist.

Nach Ausführungsformen der Erfindung wird zunächst eine erste Session zwischen dem Internetbrowser des Nutzer-Computersystems und dem Dienst-Computersystem über das Internet aufgebaut, wobei es sich bei der ersten Session um eine http-Session oder eine https-Session handeln kann. Der Nutzer kann eine Transaktionsanforderung in den Internetbrowser eingeben, beispielsweise zur Veranlassung eines Bezahlvorgangs. Beispielsweise hat der Nutzer zuvor über das Dienst-Computersystem eine Ware bestellt und möchte diese bestellte Ware bezahlen, wozu der Nutzer die entsprechende Transaktionsanforderung in den Internet-browser eingibt, welche an das Dienst-Computersystem über die erste Session übertragen wird.

Das Dienst-Computersystem erzeugt daraufhin eine Anforderung, d.h. einen Request eines Request-Response Protokolls. Der Request kann eine vordefinierte oder standardisierte Struktur haben. Beispielsweise kann der Request textbasiert sein, eine XML, ASN.1 oder eine binär-Struktur aufweisen oder als SAML-Request ausgebildet sein. Der Request, beispielsweise also der SAML-Request, beinhaltet eine Attributspezifikation, welche die aus dem ID-Token für die Durchführung der Transaktion auszulesenden Attribute spezifiziert. Hierbei kann es sich um Attribute handeln, welche den Nutzer, der dem ID-Token zugeordnet ist, identifizieren und/oder die eine Bezahlinformation angeben, wie zum Beispiel eine Kontoverbindung oder Kreditkarteninformationen, und/oder Attribute, welche den ID-Token selbst betreffen, wie zum Beispiel dessen Gültigkeitsdauer, Ausstellungsdatum und/oder die ausstellende Organisation oder Behörde.

Insbesondere kann die Attributspezifikation das Geburtsdatum des Nutzers beinhalten, falls zum Beispiel die Volljährigkeit des Nutzers als Voraussetzung für die Durchführung der Transaktion von dem Dienst-Computersystem zu prüfen ist.

Der Request beinhaltet dagegen keine oder keine vollständigen Transaktionsdaten zur Spezifizierung der Transaktion, das heißt zum Beispiel einen Bezahlbetrag sowie Kontoinformationen, insbesondere die Kontoverbindung des Dienst-Computersystems, auf welche die Zahlung zu leisten ist. Die Transaktionsdaten werden ganz oder teilweise zusätzlich zu dem Request von dem Dienst-Computersystem an das Nutzer-Computersystem übertragen und/oder die Transaktionsdaten werden zumindest teilweise von dem Nutzer in das Nutzer-Computersystem eingegeben.

Der Request kann ein Chiffrat der Transaktionsdaten beinhalten. Alternativ wird das Chiffrat von dem Nutzer-Computersystem erzeugt.

Ferner beinhaltet der Request einen Uniform Ressource Locator (URL) des ID-Provider-Computersystems, welches die Attribute aus dem ID-Token auslesen soll, sowie eine URL des Dienst-Computersystems zur Angabe eines Empfängers für die Response, die aufgrund der Request von dem ID-Provider-Computersystem zu generieren ist.

Das Dienst-Computersystem erzeugt für den Request eine Kennung, die den Request eindeutig identifiziert, wie z.B. einen globally unique identifier (GUID). Der Request beinhaltet diese Kennung.

Der Request wird von dem Dienst-Computersystem signiert, und zwar mithilfe eines privaten Schlüssels eines kryptografischen Schlüsselpaars, welches dem Dienst-Computersystem zugeordnet ist.

Aufgrund der Transaktionsanforderung wird über die erste Session der Request von dem Dienst-Computersystem an das Nutzer-Computersystem übertragen.

Das Dienst-Computersystem kann aus den Transaktionsdaten mithilfe einer Einwegfunktion das Chiffrat ableiten. Bei der Einwegfunktion kann es sich um eine Hash-Funktion, wie zum Beispiel Message-Digest-Algorithm 5 (MD5) oder einen Secure Hash Algorithm (SHA) handeln. Wesentlich ist dabei, dass die kryptografische Ableitung des Chiffrats mithilfe einer Einwegfunktion nicht reversibel ist, sodass aus dem Chiffrat nicht auf die Transaktionsdaten rückgeschlossen werden kann. Das Chiffrat der Transaktionsdaten können als Teil des Request, oder separat davon von dem Dienst-Computersystem über die erste Session an das Nutzer-Computersystem übertragen werden. Die Transaktionsdaten selbst sind dagegen jedenfalls nicht vollständig oder gar nicht in dem Request beinhaltet und können separat von dem Request über die erste Session von dem Dienst-Computersystem an das Nutzer-Computersystem übertragen werden oder zumindest teilweise von dem Nutzer in das Nutzer-Computersystem eingegeben werden.

Alternativ kann die Ableitung des Chiffrats der Transaktionsdaten auch durch das Nutzer-Computersystem erfolgen. Hierzu empfängt das Nutzer-Computersystem die Transaktionsdaten von dem Dienst-Computersystem über die erste Session und/oder durch unmittelbare Eingabe in das Nutzer-Computersystem durch den Nutzer und leitet dann das Chiffrat mithilfe der Einwegfunktion ab.

Anschließend wird eine zweite Session von dem Internetbrowser zu dem ID-Provider-Computersystem über das Netzwerk aufgebaut.

Der Aufbau der zweiten Session erfolgt durch Aufruf der URL des ID-Provider-Computersystems, welche in dem Request beinhaltet ist. Die zweite Session wird dabei als geschützte Kommunikationsverbindung aufgebaut, und zwar mit einer verschlüsselten Transportschicht, das heißt mit Transport Layer Security (TLS), die auch als Secure Sockets Layer (SSL) bezeichnet wird, insbesondere als https-Session.

Über die zweite Session wird das Chiffrat der Transaktionsdaten und der Request von dem Nutzer-Computersystem an das ID-Provider-Computersystem weitergeleitet. Je nach Ausführungsform kann dies so erfolgen, dass das Chiffrat der Transaktionsdaten in dem Request beinhaltet ist, sodass es von dem Dienst-Computersystem signiert ist oder dass das Chiffrat zusätzlich zu dem Request über die zweite Session übertragen wird, was insbesondere dann der Fall ist, wenn das Chiffrat von dem Nutzer-Computersystem erzeugt worden ist.

Nach Ausführungsformen der Erfindung erzeugt das ID-Provider-Computersystem aufgrund des Empfangs des Requests über die zweite Session einen Identifikator für eine noch aufzubauende dritte Session, d.h. eine sog. Session-ID. Das ID-Provider-Computersystem speichert den Request sowie das zusammen mit dem Request über die zweite Session empfangene Chiffrat mit der Session-ID für die dritte Session.

Das ID-Provider-Computersystem sendet dann eine Nachricht über die zweite Session, welche eine logische Adresse des ID-Provider-Computersystems und beispielsweise auch die Session-ID der dritten Session beinhaltet. Von dieser logischen Adresse kann der Internetbrowser bzw. das Anwendungsprogramm zu einem späteren Zeitpunkt die Response auf den zuvor weitergeleiteten Request abrufen. Bei der logischen Adresse kann es sich um einen uniform resource locator (URL) handeln, von dem die Response abrufbar ist.

Anschließend wird die dritte Session auf dem Application Layer zwischen einem Programm des Nutzer-Computersystems und dem ID-Provider-Computersystem aufgebaut, und zwar über den gesicherten Transportlayer der zweiten Session. Bei dem Programm kann es sich zum Beispiel um ein Browser-Plug-in des Internet-browsers oder ein von dem Internetbrowser verschiedenes Anwendungsprogramm handeln.

Das ID-Provider-Computersystem überträgt dann diejenigen Informationen über die dritte Session an das Programm, die für das Auslesen des oder der Attribute aus dem ID-Token benötigt werden. Diese Informationen beinhalten zumindest ein Zertifikat des ID-Provider-Computersystems, welches eine Angabe von Leserechten des ID-Provider-Computersystems zum Lesen von einem oder mehrerer Attribute beinhaltet sowie die Attributspezifikation, d.h. die Angabe derjenigen Attribute, die Ausgelesen werden sollen. Zusätzlich überträgt das ID-Provider-Computersystem das Chiffrat der Transaktionsdaten z.B. über die dritte Session an das Programm.

Das Programm des Nutzer-Computersystems prüft dann, ob die in dem Zertifikat angegebenen Leserechte ausreichend sind, um einen Lesezugriff des ID-Provider-Computersystems auf das oder die gemäß der Attributspezifikation des Requests zu lesenden Attribute zuzulassen. Wenn die Leserechte des ID-Provider-Computersystems ausreichend sind, werden die folgenden weiteren Schritte durchgeführt:
a) Das Programm des Nutzer-Computersystems prüft, ob die Transaktionsdaten und das von dem ID-Provider-Computersystem über die dritte Session empfangene Chiffrat übereinstimmen. Wenn dies der Fall ist, werden die Attributspezifikation der von dem ID-Provider-Computersystem aus dem ID-Token auszulesenden Attribute sowie die Transaktionsdaten zum Beispiel auf einem Bildschirm des Nutzer-Computersystems angezeigt und der Nutzer wird zur Eingabe seiner Bestätigung aufgefordert. Unter der Voraussetzung, dass der Nutzer seine Bestätigung eingegeben hat, werden die weiteren Schritte durchgeführt; ansonsten erfolgt ein Abbruch des Vorgangs.
b) Es wird dann eine lokale Verbindung zwischen dem Lesegerät des Nutzer-Computersystems und dem ID-Token aufgebaut. Bei einem ID-Token mit einer kontaktbehafteten Schnittstelle, beispielsweise einer Chipkarten-Schnittstelle, kann dies durch Einführen des ID-Tokens in das Lesegerät erfolgen. Bei einem ID-Token mit einer kontaktlosen Schnittstelle, wie zum Beispiel einer RFID oder einen NFC-Schnittstelle, kann dies dadurch erfolgen, dass der ID-Token auf das Lesegerät gelegt wird.
c) Der Nutzer authentifiziert sich gegenüber dem ID-Token, beispielsweise durch Eingabe seiner Personal Identification Number (PIN) oder durch Eingabe einer anderen Information, wie zum Beispiel der Erfassung eines biometrischen Merkmals des Nutzers. Bei der Authentifizierung des Nutzers gegenüber dem ID-Token wird ein Session Key vereinbart. Insbesondere kann die Vereinbarung eines Session Keys mithilfe eines Diffie-Hellman-Protokolls erfolgen.
d) Anschließend wird eine vierte Session auf dem Application Layer aufgebaut, und zwar zwischen einem Programm des ID-Tokens und dem ID-Provider-Computersystem, wobei diese vierte Session über die lokale Verbindung und die dritte Session verläuft und auf dem Application Layer eine zusätzliche Ende-zu-Ende Verschlüsselung mithilfe des in Schritt c vereinbarten Session Keys erfolgt.
e) Über die vierte Session erfolgt dann eine gegenseitige kryptografische Authentifizierung des ID-Tokens und des ID-Provider-Computersystems, beispielsweise mithilfe eines Challenge-Response-Protokolls. In die Authentifizierung des ID-Provider-Computersystems gegenüber dem ID-Token geht dabei das Chiffrat der Transaktionsdaten ein. Beispielsweise erfolgt dies so, dass eine Challenge des ID-Tokens, wie zum Beispiel eine Nounce, insbesondere eine Zufallszahl, seitens des ID-Provider-Computersystems mit dem Chiffrat der Transaktionsdaten kombiniert, wie zum Beispiel konkateniert wird. Die Kombination aus Challenge und Chiffrat wird dann von dem ID-Provider-Computersystem signiert und diese Signatur wird über die vierte Session an den ID-Token übertragen. Der ID-Token verifiziert dann die Signatur des ID-Provider-Computersystems, wobei das ID-Provider-Computersystem als authentifiziert gilt, wenn die Signatur gültig ist. Zusätzlich prüft das Programm des Nutzer-Computersystems, ob das von dem ID-Token im Rahmen der Authentifizierung empfangene Chiffrat der Transaktionsdaten mit den Transaktionsdaten der angeforderten Transaktion übereinstimmt. Dies ist eine zusätzliche Voraussetzung dafür, dass die Attribute in dem nachfolgenden Schritt f) tatsächlich aus dem ID-Token gelesen werden dürfen, da nur dann sichergestellt ist, dass die Leseanforderung des ID-Provider-Computersystems zum Lesen der Attribute gemäß der Attributspezifikation aufgrund der Transaktionsanforderung des Nutzers erfolgt.
f) Das oder die Attribute gemäß der Attributspezifikation, welche das ID-Provider-Computersystem mit dem Request empfangen hat, werden nun über die vierte Session von dem ID-Provider-Computersystem aus dem ID-Token ausgelesen. Dies setzt die erfolgreiche Authentifizierung des Nutzers in Schritt c sowie die erfolgreiche gegenseitige Authentifizierung des ID-Tokens und des ID-Provider-Computersystems in Schritt e) voraus und erfolgt verschlüsselt über die vierte Session, und zwar mit einer zusätzlichen Ende-zu-Ende Verschlüsselung z.B. mithilfe des in Schritt c) vereinbarten Session Keys auf dem Application Layer, sodass ein Maximum an Sicherheit und Vertrauenswürdigkeit hinsichtlich des oder der ausgelesenen Attribute gegeben ist.

Das ID-Provider-Computersystem erzeugt dann eine Response, beispielsweise eine SAML-Response, die das oder die ausgelesenen Attribute sowie das Chiffrat der Transaktionsdaten beinhaltet. Die SAML-Response wird von dem ID-Provider-Computersystem signiert.

Die Response wird dann von dem ID-Provider-Computersystem zu dem Dienst-Computersystem übertragen, beispielsweise über das Nutzer-Computersystem oder eine andere Netzwerkverbindung. Das Dienst-Computersystem überprüft zur Verifizierung der Response deren Signatur. Aufgrund des Empfangs der für die angeforderte Transaktion benötigten Attribute aus dem ID-Token des Nutzers wird die Transaktion dann von dem Dienst-Computersystem ausgeführt, das heißt beispielsweise ein Bezahlvorgang ausgelöst und/oder ein bestelltes Produkt geliefert.

Ausführungsformen der Erfindung sind besonders vorteilhaft, da das Auslesen der Attribute aus dem ID-Token durch das ID-Provider-Computersystem die Authentizität der ausgelesenen Attribute gewährleistet und gleichzeitig die Zustimmung des Nutzers zu dem Auslesen der Attribute für den Zweck der Durchführung einer bestimmten von dem Nutzer ausdrücklich genehmigten Transaktion erforderlich ist. Mit anderen Worten besteht für den Nutzer die Sicherheit, dass er das Auslesen der Attribute durch das ID-Provider-Computersystem nur für den Zweck der zuvor angeforderten Transaktion zulässt, ohne dass das ID-Provider-Computersystem Kenntnis von den vollständigen Transaktionsdaten haben muss. Letzteres ist besonders vorteilhaft im Hinblick auf den Schutz der Privatsphäre, da es auf diese Art und Weise bereits technisch ausgeschlossen wird, dass durch das ID-Provider-Computersystem eine Historie der von dem Nutzer vorgenommenen Transaktionen aufgezeichnet wird.

Ein weiterer Vorteil ist, dass der ID-Token die ausgelesenen Attribute nicht signieren muss. Zwar hat beispielsweise der neue elektronische Personalausweis der Bundesrepublik Deutschland eine Signaturfunktion. Die Nutzung dieser Signaturfunktion erfordert allerdings, dass kryptografisches Schlüsselmaterial für die Nutzung der Signaturfunktion in dem elektronischen Personalausweis vorhanden sein muss, was einen entsprechenden technischen und Kostenaufwand bedeutet, welcher nicht von allen Nutzern akzeptiert wird. Insbesondere wird durch die Erfindung auch für eine nur gelegentliche Nutzung des ID-Tokens für die Durchführung von Transaktionen eine effiziente und zugleich sehr sichere Anwendung geschaffen.

Nach Ausführungsformen der Erfindung wird aus dem ID-Token durch das ID-Provider-Computersystem nur ein Pseudonym des Nutzers ausgelesen. Nach Empfang der Response von dem ID-Provider-Computersystem verwendet das Dienst-Computersystem das Pseudonym des Nutzers als Zugriffsschlüssel zum Zugriff auf ein Nutzerprofil dieses Nutzers, um die in einer Datenbank, zum Beispiel des Dienst-Computersystems gespeicherten Attribute des Nutzers auszulesen, wie zum Beispiel dessen Name, Adresse und Kontoverbindung.

Nach einer Ausführungsform der Erfindung beinhaltet die Response des ID-Provider-Computersystems das Chiffrat der Transaktionsdaten, wobei die Response von dem ID-Provider-Computersystem signiert ist. Das Dienst-Computersystem ordnet die von dem ID-Provider-Computersystem empfangene Response der zuvor von dem Nutzer empfangenen Transaktionsanforderung zu, indem das Chiffrat der Transaktionsdaten der Transaktionsanforderung mit dem in der Response beinhalteten Chiffrat abgeglichen wird; wenn beide Chiffrate miteinander übereinstimmen, so bedeutet dies, dass sich die empfangene Response auf die betreffende Transaktionsanforderung des Nutzers bezieht.

Nach einer Ausführungsform der Erfindung hat das Nutzer-Computersystem einen Kartenleser mit einem Display, wie zum Beispiel einen sogenannten Klasse 2- oder Klasse 3-Kartenleser. Das Programm des Nutzer-Computersystems übermittelt die Transaktionsdaten vor der Nutzer-Authentifizierung an den Kartenleser. Der Kartenleser zeigt die Transaktionsdaten an, sodass sie von dem Benutzer überprüft werden können. Anschließend kann der Nutzer seine Authentifizierungsdaten, wie zum Beispiel seine PIN, in den Kartenleser eingeben, um hierdurch (i) die Transaktionsdaten zu bestätigen und sich (ii) gegenüber dem ID-Token zu authentifizieren.

Nach einer Ausführungsform der Erfindung stellt der Kartenleser bei der TerminalAuthentifizierung des ID-Provider-Computersystems gegenüber dem ID-Token sicher, dass das korrekte Chiffrat der Transaktionsdaten von dem ID-Provider-Computersystem an den ID-Token geschickt wird, indem der Kartenleser die zuvor von dem Programm des Nutzer-Computersystems empfangenen Transaktionsdaten mit dem Chiffrat der Transaktionsdaten, welche der Kartenleser von dem ID-Server-Computersystem empfangen hat, abgleicht, beispielsweise indem der Kartenleser aus den Transaktionsdaten seinerseits deren Chiffrat bildet, um dieses Chiffrat mit dem von dem ID-Server-Computersystem empfangenen Chiffrat auf Übereinstimmung zu prüfen.

Nach einer weiteren Ausführungsform der Erfindung werden die Transaktionsdaten von dem Programm des Nutzer-Computersystems an das ID-Token über den Kartenleser übertragen und dort temporär gespeichert. Vor der Authentifizierung des Nutzers gegenüber dem ID-Token werden die Transaktionsdaten auf einem Display des ID-Tokens angezeigt. Durch nachfolgende Eingabe seiner Authentisierungsdaten bestätigt der Nutzer wiederum i) die Transaktionsdaten und ii) authentifiziert sich gleichzeitig gegenüber dem ID-Token.

Nach einer Ausführungsform der Erfindung prüft der ID-Token die Korrektheit des Chiffrats, welches es im Rahmen der Terminalauthentifizierung von dem ID-Server-Computersystem empfängt, indem das ID-Token die von dem Programm des Nutzer-Computersystems empfangenen Transaktionsdaten mithilfe der Einwegfunktion chiffriert und das daraus resultierende Chiffrat mit dem von dem ID-Server-Computersystem empfangene Chiffrat auf Übereinstimmung prüft. Falls keine Übereinstimmung vorliegt, wird der Vorgang an dieser Stelle abgebrochen und es kommt zu einer Fehlermeldung. Dadurch ist ein besonders wirksamer Schutz gegen Schadsoftware, insbesondere sog. Trojaner, gegeben, da die Prüfung auf dem ID-Token selbst erfolgt.

Nach einer Ausführungsform der Erfindung sendet das ID-Provider-Computersystem die Response über das Programm des Nutzer-Computersystems an das Dienst-Computersystem, das heißt über die Session 2 oder 3 und die Session 1. Dies hat den Vorteil, dass das Dienst-Computersystem keinen Zustand über die ausgelösten Transaktionen halten muss.

Nach einer Ausführungsform der Erfindung handelt es sich bei dem Programm des Nutzer-Computersystems um ein Browser-Plug-in des Internetbrowsers, wobei es sich bei dem Internetbrowser um ein übliches Browserprogramm, wie zum Beispiel Microsoft Internet Explorer, Safari, Google Chrome oder Firefox handeln kann. Alternativ kann es sich bei dem Programm des Nutzer-Computersystems um ein von dem Internetbrowser separates Anwendungsprogramm handeln.

Im Weiteren werden Ausführungsformen der Erfindung mit Bezugnahme auf die Zeichnungen näher erläutert.

Es zeigen:
- Fig. 1: ein Blockdiagramm einer Ausführungsform eines erfindungsgemäßen ID-Tokens,
- Fig. 2: eine Anordnung einer Ausführungsform eines erfindungsgemäßen Computersystems zur Durchführung einer Ausführungsform eines erfindungsgemäßen Verfahrens.

Elemente der Ausführungsformen der nachfolgenden Figuren, die zueinander identisch sind oder einander entsprechen, sind jeweils mit denselben Bezugszeichen gekennzeichnet.

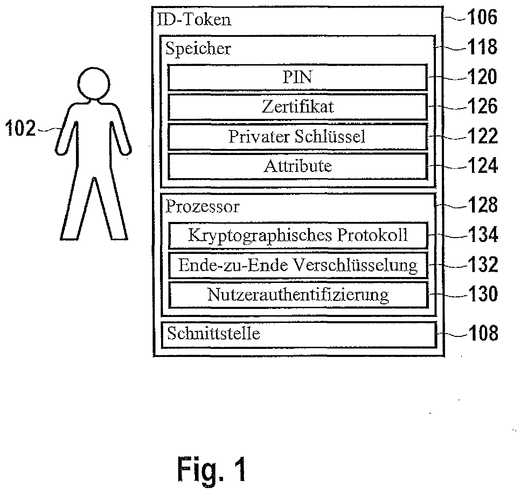

Die Figur 1 zeigt einen ID-Token 106, bei dem es sich zum Beispiel um einen elektronischen Personalausweis handeln kann.

Der geschützte Speicherbereich 120 des ID-Token 106 dient zur Speicherung eines Referenzwerts, der für die Authentifizierung eines Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

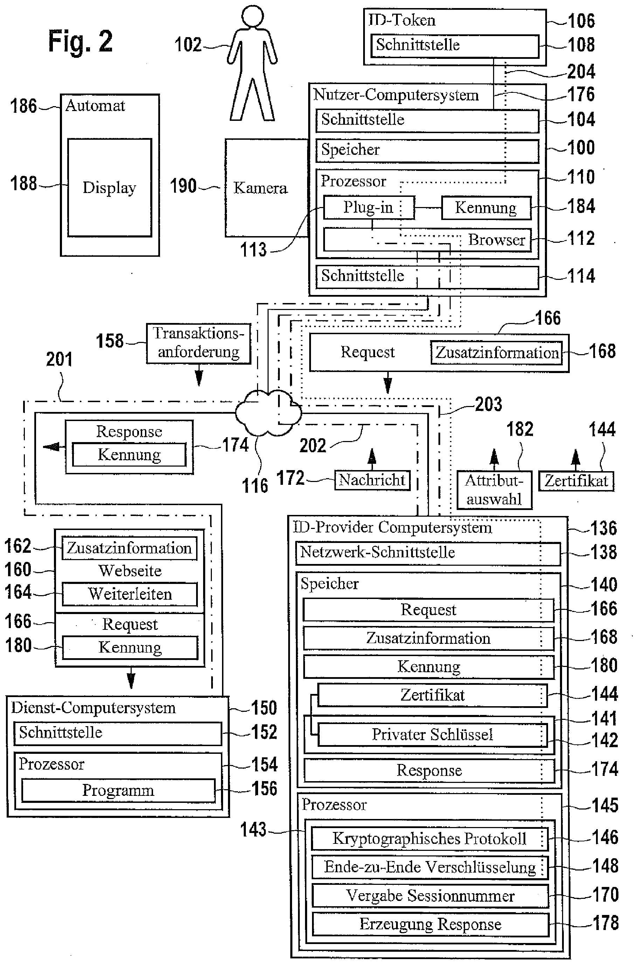

Die Programminstruktionen 132 dienen zur Ende-zu-Ende-Verschlüsselung von zwischen dem ID-Token 106 und einem ID-Provider-Computersystem 136 (vgl. Fig. 2) übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Der ID-Token 106 hat eine Schnittstelle 108 zur Kommunikation mit einer entsprechenden Schnittstelle 104 eines Nutzer-Computersystems 100 (vergleiche Figur 2). Die Schnittstelle kann kontaktlos oder kontaktbehaftet ausgebildet sein. Insbesondere kann es sich um eine RFID- oder um eine NFC-Kommunikationsschnittstelle handeln.

Der Zugriff auf den geschützten Speicherbereich 124 zum Lesen einer oder mehrerer der Attribute kann nur über den Prozessor 128 des ID-Tokens 106 erfolgen, da der geschützte Speicherbereich 124 sowie auch die weiteren geschützten Speicherbereiche 120, 122 nicht unmittelbar zum Beispiel über ein Bussystem mit der Schnittstelle 108 verbunden sind, sondern nur mit dem Prozessor 128, das heißt ein Zugriff über die Schnittstelle 108 unmittelbar auf den geschützten Speicherbereich 124 ist bereits schaltungstechnisch ausgeschlossen. Allein der Prozessor 128 kann also lesend auf den geschützten Speicherbereich 124 zugreifen, um dann gegebenenfalls die ausgelesenen Attribute über die Schnittstelle 108 auszugeben.

Die Figur 2 zeigt ein Nutzer-Computersystem 100 des Nutzers 102. Bei dem Nutzer-Computersystem 100 kann es sich um einen Personal-Computer (PC), einen tragbaren Computer, wie zum Beispiel einen Laptop, Notebook oder Tablet-Computer, ein mobiles Telekommunikationsgerät, insbesondere ein Smartphone handeln.

Das Nutzer-Computersystem hat zumindest einen Prozessor 110 zur Ausführung eines Anwendungsprogramms 112. Das Anwendungsprogramm 112 ist dazu ausgebildet, über eine Netzwerk-Schnittstelle 114 des Nutzer-Computersystems 100 über ein Netzwerk 116 zu kommunizieren. Beispielsweise handelt es sich bei dem Anwendungsprogramm um einen Internet-Browser oder ein anderes spezialisiertes Anwendungsprogramm, welches über das Netzwerk 116 kommunizieren kann, insbesondere ein html-fähiges Anwendungsprogramm.

Der Prozessor 110 dient zur Ausführung eines weiteren Programms 113, bei dem es sich beispielsweise um ein Plug-in für das Anwendungsprogramm 112 handeln kann, beispielsweise um ein Browser-Plug-in, wenn das Anwendungsprogramm 112 als Internet-Browser ausgebildet ist, oder um ein von dem Anwendungsprogramm separates Programm.

Bei dem Netzwerk kann es sich um ein Computernetzwerk, wie zum Beispiel das Internet, handeln. Insbesondere kann das Netzwerk 116 auch ein Mobilfunknetzwerk beinhalten.

Das ID-Provider-Computersystem 136 hat eine Netzwerk-Schnittstelle 138 zur Kommunikation über das Netzwerk 116. Das ID-Provider-Computersystem 136 hat ferner einen Speicher 140 mit einem geschützten Speicherbereich 141, in dem ein privater Schlüssel 142 des ID-Provider-Computersystems 136 gespeichert ist, sowie auch das entsprechende Zertifikat 144. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann, sowie Transaktionen durchgeführt.

Je nach der Art des beauftragten oder bestellten Produkts oder der Dienstleistung muss das Dienst-Computersystem 150 ein oder mehrere Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Zur Durchführung einer elektronischen Transaktion kann wie folgt vorgegangen werden:
- Der Nutzer 102 startet das Anwendungsprogramm 112 des Nutzer-Computersystems, wobei im Weiteren ohne Beschränkung der Allgemeinheit davon ausgegangen wird, dass es sich hierbei um einen Internet-Browser handelt. Der Nutzer 102 gibt eine URL des Dienst-Computersystems 150 in den Internet-Browser ein, so dass daraufhin eine erste Session 201 zwischen dem Internet-Browser 112 und dem Dienst-Computersystem 150 über das Netzwerk 116 aufgebaut wird. Der Nutzer kann dann über die erste Session 201 einen von dem Dienst-Computersystem 150 angebotenen Dienst anfordern, wie zum Beispiel ein Produkt bestellen, Daten zum Download anfordern oder die Durchführung einer finanziellen Transaktion anfordern. Hierzu wird von dem Internet-Browser 112 eine entsprechende Transaktionsanforderung 158 an das Dienst-Computersystem 150 gesendet, die diese Anforderung signalisiert.
- Das Dienst-Computersystem empfängt also von dem Internet-Browser über die erste Session eine Transaktionsanforderung 158 des Nutzers 102, die Transaktionsdaten beinhaltet.
- Aufgrund des Empfangs der Transaktionsforderung 158 über die erste Session 201 erzeugt das Dienst-Computersystem 150 einen Request 166. Der Request 166 beinhaltet (i) eine Attributspezifikation, der aus dem ID-Token für die Durchführung der Transaktion auszulesenden Attribute. Bei diesen Attributen kann es sich um persönliche Angaben zu dem Nutzer 102 und/oder Daten betreffend den ID-Token 106 selbst oder ein Pseudonym des Nutzers 102, welches von dem ID-Token 106 verfügbar ist, handeln. Der Request beinhaltet ferner (ii) die Transaktionsdaten zur Spezifizierung der Transaktion, wie zum Beispiel einen Bezahlbetrag, der für den Kauf des bestellten Produkts oder die Durchführung des bestellten Dienstes an das Dienst-Computersystem 150 oder einen Dritten zu entrichten ist, und/oder andere Transaktionsdaten, die die durchzuführende Transaktion spezifizieren. Der Request beinhaltet ferner (iii) eine Kennung 180 des Requests, beispielsweise eine GUID, die für das sogenannte Binding des Requests und einer daraufhin empfangenen Response 174 erforderlich ist. Für die Erzeugung der Kennung kann das Dienst-Computersystem 150 einen GUID-Generator aufweisen. Die Request beinhaltet ferner (iv) eine URL des ID-Provider-Computersystems 136 (v) eine URL des Dienst-Computersystems 150 selbst und ein Chiffrat der Transaktionsdaten, wobei das Dienst-Computersystem 150 das Chiffrat mit Hilfe einer vorgegebenen Einwegfunktion, z.B. einer HASH-Funktion ableitet.
- Der Request wird von dem Dienst-Computersystem 150 signiert, nämlich mit Hilfe eines privaten Schlüssels des Dienst-Computersystems 150. Bei dem Request 166 kann es sich um einen SAML-Request oder einen anderen Request eines Request-Response-Protokolls handeln.
- Als Antwort auf die Transaktionsanforderung 158 sendet dann das Dienst-Computersystem 150 eine Webseite 160 über die erste Session 201 an das Nutzer-Computersystem 100, wobei die Webseite 160 ein Eingabefeld 162 zur Eingabe einer Zusatzinformation durch den Nutzer 102 für die Transaktion aufweisen kann und ferner ein Eingabeelement 164, das der Nutzer 102 zum Beispiel durch Anklicken selektieren kann, wenn die Webseite 160 durch den Internet-Browser 112 wiedergegeben wird, um die Weiterleitung des Request 166 zu erlauben. Zusammen mit der Webseite 160 wird auch der Request 166 über die erste Session 201 zu dem Internet-Browser 112 übertragen.
- Aufgrund des Empfangs der Webseite 160 und des Requests 166 wird die Webseite 160 durch den Internet-Browser 112 wiedergegeben, so dass der Nutzer 102 ggf. die Zusatzinformation in das Eingabefeld 162 eingeben kann. Beispielsweise handelt es sich bei der Zusatzinformation um ergänzende Transaktionsdaten, wie z.B. eine Kontoverbindung des Nutzers 102, eine Kreditkartennummer des Nutzers 102 oder andere ergänzende Transaktionsdaten und/oder um eine Authentifizierungsinformation zum Nachweis der Berechtigung des Nutzers 102 für die Durchführung der Transaktion, wozu der Nutzer 102 beispielsweise ein One-Time-Passwort (OTP) in das Eingabefeld 162 eingibt. Vorzugsweise wird die von dem Nutzer 102 eingegebene Zusatzinformation 168 mit dem öffentlichen Schlüssel des Dienst-Computersystems 150 durch das Nutzer-Computersystem 100 verschlüsselt, um ein entsprechendes Chiffrat zu erhalten.
- Anschließend wird eine zweite Session 202 zwischen dem Internet-Browser 112 und dem ID-Provider-Computersystem 136 über das Netzwerk 116 aufgebaut, und zwar mit Hilfe der URL des ID-Provider-Computersystems 136, die das Nutzer-Computersystem 100 mit dem Request 166 empfangen hat. Die zweite Session 202 wird mit einem gesicherten Transportlayer aufgebaut, beispielsweise als https-Session.
- Über die zweite Session 202 werden der Request 166 und - je nach Ausführungsform - auch das mit Hilfe des öffentlichen Schlüssels des Dienst-Computersystems 150 gewonnene Chiffrat der Zusatzinformation 168 von dem Nutzer-Computersystem 100 an das ID-Provider-Computersystem 136 weitergeleitet.

- Aufgrund des Empfangs des Requests 166 durch das ID-Provider-Computersystem 136 erzeugt dieses durch Ausführen seiner Programminstruktionen 170 eine Session-ID für eine noch aufzubauende dritte Session 203. Der Request 166 und das Chiffrat der Zusatzinformation 168 werden in dem Speicher 140 des ID-Provider-Computersystems 136 gespeichert.
- Das ID-Provider-Computersystem 136 generiert dann eine Nachricht 172, die die Session-ID für den Aufbau der dritten Session 203 und eine logische Adresse beinhaltet. Mit Hilfe der logischen Adresse kann die von dem ID-Provider-Computersystem 136 aufgrund des Request 166 zu erzeugende Response 174 abgerufen werden. Insbesondere kann die logische Adresse als eine URL ausgebildet sein. Die Nachricht 172 wird über die zweite Session 202 von dem ID-Provider-Computersystem 136 an den Internet-Browser 112 gesendet.
- Aufgrund des Empfangs der Nachricht 172 wird die dritte Session 203 zwischen dem Programm 113 des Nutzer-Computersystems 100 und dem ID-Provider-Computersystem 136 über den gesicherten Transportlayer der zweiten Session 202 aufgebaut. Beispielsweise handelt es sich bei dem Programm 113 um ein Browser-Plug-in des Internet-Browsers 112. Alternativ kann es sich bei dem Programm 113 auch um ein weiteres Anwendungsprogramm handeln. Es ist dabei auch möglich, die Funktionalitäten des Internet-Browsers 112 und die des Programms 113 in einem Programm zu implementieren.
- Über die dritte Session 203 wird dann zumindest das Zertifikat 144 an das Programm 113 übertragen.
- Durch das Programm 113 wird dann geprüft, ob die in dem Zertifikat 144 angegebenen Leserechte ausreichend sind, um einen Lesezugriff des ID-Provider-Computersystems 136 auf das oder die gemäß der Attributspezifikation, die in dem Request 166 beinhaltet ist, zu lesenden Attribute zuzulassen. Nur dann, wenn diese Leserechte ausreichend sind, werden die folgenden Schritte durchgeführt:
   a) Es wird eine lokale Verbindung 176 zwischen den Schnittstellen 104 und 108 aufgebaut. Beispielsweise erscheint auf dem Bildschirm des Nutzer-Computersystems 100 eine Aufforderung für den Nutzer 102 zum Einführen des ID-Tokens 106 in ein Lesegerät des Nutzer-Computersystems 100, welches die Schnittstelle 104 aufweist oder zum Auflegen des ID-Tokens 106 auf eine kontaktlos ausgebildete Schnittstelle 104.
   b) Der Nutzer 102 authentifiziert sich dann gegenüber dem ID-Token beispielsweise durch Eingabe seiner PIN in das Nutzer-Computersystem 100 bzw. dessen Lesegerät. Die Authentifizierung des Nutzers kann mit Hilfe eines kryptographischen Protokolls erfolgen, beispielsweise mittels eines Challenge-Response-Protokolls oder basierend auf einem Diffie-Helman-Schlüsselaustausch, wobei im Rahmen der Authentifizierung des Nutzers ein Session-Key vereinbart wird.
   c) Unter der Voraussetzung der erfolgreichen Authentifizierung des Nutzers wird eine vierte Session 204 zwischen dem ID-Token 106 und dem ID-Provider-Computersystem 136 aufgebaut, und zwar über die lokale Verbindung 176 und die dritte Session 203. Die vierte Session 204 wird mit einer Ende-zu-Ende-Verschlüsselung mit Hilfe des Session-Keys, der bei der Authentifizierung des Nutzers in dem Schritt b) vereinbart worden ist, geschützt.
   d) Über die vierte Session erfolgt dann eine gegenseitige Authentifizierung des ID-Tokens 106 und des ID-Provider-Computersystems 136 mit Hilfe der jeweiligen privaten Schlüssel, das heißt den in dem geschützten Speicherbereich 122 gespeicherten privaten Schlüssels des ID-Tokens 106 und dem privaten Schlüssels 142 des ID-Provider-Computersystems 136. Für diese gegenseitige Authentifizierung können die Zertifikate des ID-Tokens 106 aus dem Speicherbereich 126 (vergleiche Figur 1) sowie das Zertifikat 144 des ID-Provider-Computersystems 136 über die vierte Session ausgetauscht werden.
   e) Unter der Voraussetzung der erfolgreichen Authentifizierung des Nutzers gegenüber dem ID-Token und der erfolgreichen gegenseitigen Authentifizierung des ID-Tokens 106 und des ID-Provider-Computersystems 136 sowie der weiteren Voraussetzung der Übereinstimmung des Chiffrats der Transaktionsdaten mit den Transaktionsdaten, liest dann das ID-Provider-Computersystem 136 das oder die Attribute gemäß der Attributspezifikation aus dem ID-Token 106 aus, wobei die Attribute durch die Ende-zu-Ende-Verschlüsselung bei der Übertragung von dem ID-Token 106 zu dem ID-Provider-Computersystem 136 geschützt werden. Hierzu sendet das ID-Provider-Computersystem über die vierte Session 204 ein Lesekommando über die vierte Session an den ID-Token 106. Das Lesekommando 182 beinhaltet die Attributspezifikation, das heißt die Auswahl derjenigen Attribute, die aus dem geschützten Speicherbereich 124 des ID-Tokens 106 ausgelesen werden sollen.
      Durch Ausführung der Programminstruktionen 178 wird dann von dem ID-Provider-Computersystem 136 die Response 174, beispielsweise ein SAML-Response, auf den Request 166 erzeugt. Die Response 178 beinhaltet die zuvor über die vierte Session 240 aus dem ID-Token 106 ausgelesenen Attribute, das Chiffrat der Zusatzinformation 168, sowie die Kennung 180, die das Dienst-Computersystem 150 initial für den Request 166 vergeben hat. Die Response 174 wird von dem ID-Provider-Computersystem 136 mit Hilfe des privaten Schlüssels 142 signiert und dann in dem Speicher 140 gespeichert, so dass die Request 166 von der logischen Adresse abrufbar ist.
- Das Nutzer-Computersystem 100, wie zum Beispiel dessen Internet-Browser 112, liest dann mit Hilfe der logischen Adresse die Response 174 beispielsweise über die zweite Session 202 aus dem Speicher 140.
- Die Response 174 wird dann von dem Nutzer-Computersystem 100, beispielsweise von dem Internet-Browser 112, über die erste Session 201 an das Dienst-Computersystem 150 weitergeleitet. Hierbei kann vorgesehen sein, dass der Nutzer 102 von dem Internet-Browser 112 zur Eingabe einer Bestätigung aufgefordert wird, bevor die Response 174 an das Dienst-Computersystem weitergeleitet wird. Dabei kann ferner vorgesehen sein, dass von dem Internet-Browser der Inhalt der Response 174 ganz oder teilweise angezeigt wird, insbesondere die aus dem ID-Token ausgelesenen Attribute und/oder die Zusatzinformation 168, damit sich der Nutzer 102 von der Richtigkeit dieser Daten überzeugen kann, bevor sie an das Dienst-Computersystem 150 zur Durchführung der Transaktion weitergeleitet werden.
- Das Dienst-Computersystem 150 ordnet die empfangene Response 174 dem Request 166 anhand der übereinstimmenden Kennungen 180 des Requests 166 und der Response 174 zu.
- Das Dienst-Computersystem 150 prüft dann die Signatur der Response 166 und liest das oder die erforderlichen Attribute aus der Response 174 aus. Anhand der Attribute wird dann geprüft, ob die angeforderte Transaktion durchgeführt werden kann, indem das oder die Attribute mit einem oder mehreren vorgegebenen Kriterien verglichen wird. Bei diesen Kriterien kann es sich zum Beispiel um das Alter oder die Kreditwürdigkeit des Nutzers 102 handeln. Bei dem Attribut kann es sich auch um ein Pseudonym des Nutzers 102 handeln, mit Hilfe dessen das Dienst-Computersystem 150 dann ein in einer Datenbank des Dienst-Computersystems 150 gespeichertes Attribut des Nutzers 102, wie zum Beispiel eine Lieferadresse ausliest. Das Prüfkriterium ist hierbei, ob ein Nutzer mit dem in der Response 174 beinhalteten Pseudonym seitens des Dienst-Computersystems 150 registriert ist.
   Ergibt die Prüfung des Dienst-Computersystems 150, dass die Transaktion durchführbar ist, so wird die Transaktion anhand der Transaktionsdaten und der Zusatzinformation 168 durchgeführt.

Das ID-Provider-Computersystem 136 empfängt also das Chiffrat der Transaktionsdaten als Teil des Request 166. Dieses Chiffrat der Transaktionsdaten sendet das ID-Provider-Computersystem 136 beispielsweise über die dritte Session 203 zusammen mit dem Zertifikat 144. Das Programm 113 berechnet dann aus den Transaktionsdaten, die es zum Beispiel über die erste Session von dem Dienst-Computersystem 150 oder durch Eingabe des Nutzers 102 in das Nutzer-Computersystem 100 empfangen hat, das Chiffrat mithilfe der vorgegebenen Einwegfunktion und überprüft ob das so berechnete Chiffrat mit dem von dem ID-Provider-Computersystem 136 empfangenen Chiffrat übereinstimmt. Wenn dies nicht der Fall ist, wird der Ablauf an dieser Stelle abgebrochen.

Alternativ erfolgt diese Prüfung nicht durch das Programm 113, sondern durch das Lesegerät des Nutzer-Computersystems 100 oder durch den ID-Token 106 selbst. Hierzu kann das Chiffrat der Transaktionsdaten, welches das Nutzer-Computersystem von dem ID-Provider-Computersystem 136 empfangen hat sowie auch die Transaktionsdaten an das Lesegerät oder über die Schnittstelle 104 an den ID-Token 106 weitergeleitet werden. Dort erfolgt dann jeweils die Erzeugung des Chiffrats und die Überprüfung auf Übereinstimmung des berechneten Chiffrats zu dem von dem ID-Provider-Computersystem 136 über das Nutzer-Computersystem 100 empfangenen Chiffrats.

Alternativ kann das ID-Provider-Computersystem 136 das Chiffrat der Transaktionsdaten über die vierte Session 204 unmittelbar an den ID-Token 106 übertragen. Ferner empfängt der ID-Token 106 die Transaktionsdaten über die Schnittstelle 104 von dem Nutzer-Computersystem 100. Der ID-Token 106 berechnet aus den Transaktionsdaten das Chiffrat mithilfe der vorgegebenen Einwegfunktion und prüft das so berechnete Chiffrat mit dem über die vierte Session empfangenen Chiffrat auf Übereinstimmung. Wenn keine Übereinstimmung vorliegt, wird der Ablauf an dieser Stelle abgebrochen. Diese Ausführungsform ist besonders vorteilhaft, da selbst dann, wenn auf dem Nutzer-Computersystem eine Schad-Software, wie zum Beispiel ein Trojaner, vorhanden sein sollte, keine Angriffsmöglichkeit gegeben ist.

Nach einer Ausführungsform der Erfindung handelt es sich bei dem Programm 113 um einen Browser-Plug-in, das in einer Registry eines Betriebssystems des Nutzer-Computersystems mit einer Plug-in-Kennung registriert ist, wobei es sich bei dem Betriebssystem zum Beispiel um ein Windows-Betriebssystem, Android oder iOS handeln kann. In diesem Fall beinhaltet die Nachricht 172 von dem ID-Provider-Computersystem an den Internet-Browser 112 diese Plug-in-Kennung 184, so dass das Plug-in 113 aufgrund des Empfangs der Nachricht gestartet wird.

Nach einer weiteren Ausführungsform der Erfindung handelt es sich bei dem Programm 113 ein von dem Internet-Browser 112 separates Anwendungsprogramm, wie zum Beispiel eine sogenannte Bürger-App oder Ausweis-App. Dieses Anwendungsprogramm 113 wird von dem Internet-Browser 112 durch Aufruf einer lokalen URL gestartet, wobei die lokale URL eine fest vorgegebener Portnummer gemäß dem TCP-Protokoll beinhaltet. Diese lokale URL wird zusammen mit der Webseite 160 von dem Dienst-Computersystem 150 an das Nutzer-Computersystem 100 übertragen und zwar über die erste Session 201, um das Starten des Anwendungsprogramms 113 mit Hilfe der lokalen URL durch den Internet-Browser 112 zu bewirken.

Die Response 174 beinhaltet das Chiffrat der Zusatzinformation 168. Das Dienst-Computersystem 150 entschlüsselt das Chiffrat der Zusatzinformation 168 mit Hilfe des privaten Schlüssels des Dienst-Computersystems 150, um dann mit Hilfe der Zusatzinformation 168 die angeforderte Transaktion durchzuführen. Hierbei kann es sich zum Beispiel um die Durchführung einer finanziellen Transaktion, wie zum Beispiel die Durchführung einer Überweisung in der Höhe des Bezahlbetrags handeln, der in der Zusatzinformation 168 angegeben ist.

Nach einer Ausführungsform der Erfindung beinhaltet die Zusatzinformation 168 ein OTP. Das Dienst-Computersystem 150 prüft dann als zusätzliche Voraussetzung für die Durchführung der Transaktion, ob das OTP gültig ist. Vorzugsweise wird das OTP durch das Nutzer-Computersystem 100 mit dem öffentlichen Schlüssel des Dienst-Computersystems 150 verschlüsselt und dann von dem Dienst-Computersystems 150 nach dem Empfang der Zusatzinformation mit dem verschlüsselten OTP entschlüsselt, um dann dessen Validität zu prüfen.

Nach einer Ausführungsform der Erfindung gehört zu dem erfindungsgemäßen Computersystem ein Terminal 186, bei dem es sich zum Beispiel um einen Automat, insbesondere einen Bankautomat oder Verkaufsautomat, handeln kann. Beispielsweise kann der Nutzer 102 in das Terminal 186 einen Geldbetrag eingeben, um Bargeld von seinem Konto abzuheben. Auf einem Display 188 des Automat wird dann ein optisch erfassbares Muster angezeigt, wie zum Beispiel ein QR-Code, der ein URL des Dienst-Computersystems 150 sowie den von dem Nutzer 102 gewünschten Geldbetrag beinhaltet.

Dieses optische Muster wird von dem Display 188 mit Hilfe einer Kamera 190 des Nutzer-Computersystems 100 erfasst. Das Nutzer-Computersystem 100 erzeugt dann die Transaktionsanforderung 158, die diesen Geldbetrag angibt. Die erste Session 201 wird hier mit Hilfe der aus dem optischen Muster erfassten URL des Dienst-Computersystems 150 aufgebaut und die Transaktionsanforderung 158 mit dem gewünschten Geldbetrag wird über diese erste Session 201 an das Dienst-Computersystem 150 übermittelt. Das Dienst-Computersystem 150 erzeugt dann einen entsprechenden Request 166, um die für die Auszahlung des gewünschten Geldbetrags erforderlichen Attribute und Zusatzinformationen 168 abzufragen.

Je nach Ausführungsform wird dann durch die ID-Provider-Computersystem 136 oder durch das Dienst-Computersystem 150 die Belastung eines Kontos des Nutzers 102, welches dieser zum Beispiel in der Zusatzinformation 168 angegeben hat, veranlasst. Aufgrund des Empfangs der Response 174 und der Veranlassung der Zahlung empfängt dann das Terminal 186 ein Signal zur Ausgabe des gewünschten Geldbetrags zum Beispiel in Form von Bargeld oder zur Aufladung einer Cash-Card des Nutzers 102. Dies kann so erfolgen, dass das Terminal 186 unmittelbar mit dem Dienst-Computersystem 150 verbunden ist oder über das Netzwerk 116.

Alternativ kann es sich bei dem Terminal 186 auch um einen Verkaufsautomat handeln, wobei dann kein Bargeld, sondern ein gewünschtes Produkt, wie zum Beispiel eine Getränkedose oder eine Zigarettenschachtel von dem Verkaufsautomaten abgegeben wird, nachdem die Durchführung der Zahlung von dem Dienst-Computersystem 150 signalisiert worden ist.

In einer weiteren Anwendung kann es sich bei dem Terminal 186 um ein mobiles Telekommunikationsgerät, insbesondere ein Smartphone handeln. Wenn der Nutzer 102 von dem Inhaber des Terminals 186 etwas kaufen möchte, so gibt der Inhaber des Terminals 186 den entsprechenden Kaufpreis in das Terminal 186 ein, so dass dann auf dem Display 188 in Form des optisch erfassbaren Musters wiederum dieser Kaufpreis als Bezahlbetrag sowie die URL des Dienst-Computersystems 150 ausgegeben wird. Nach Beendigung der Transaktion empfängt das Terminal 186 von dem Dienst-Computersystem 150 ein Signal, welches anzeigt, dass der Bezahlvorgang erfolgt ist und der Inhaber des Terminals 186 gibt dann die Ware an den Nutzer 102 ab. Dies kann auch in dem Kassensystem zum Beispiel eines Supermarkts implementiert sein. Eine weitere Anwendung ist ein Taxameter, welches Taxigebühren erfasst oder ein anderer Verbrauchszähler, wie zum Beispiel ein Verbrauchszähler für den Strom- oder Gasverbrauch eines Haushalts, insbesondere ein sog. Smartmeter.

### Bezugszeichenliste

- 100: Nutzer-Computersystem
- 102: Nutzer
- 104: Schnittstelle
- 106: ID-Token
- 108: Schnittstelle
- 110: Prozessor
- 112: Anwendungsprogramm/Internet-Browser
- 113: Programm/Anwendungsprogramm
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 141: geschützter Speicherbereich
- 142: privater Schlüssel
- 144: Zertifikat
- 145: Prozessor
- 146: Programminstruktionen
- 148: Programminstruktionen
- 150: Dienst-Computersystem
- 152: Netzwerk-Schnittstelle
- 154: Prozessor
- 156: Programminstruktionen
- 158: Transaktionsanforderung
- 160: Webseite
- 162: Eingabefeld
- 164: Eingabeelement
- 166: Request
- 168: Zusatzinformation
- 170: Programminstruktionen
- 172: Nachricht
- 174: Response
- 176: lokale Verbindung
- 178: Programminstruktionen
- 180: Kennung
- 182: Lesekommando
- 184: Kennung
- 186: Terminal
- 188: Display
- 190: Kamera

## Patentansprüche

1. Elektronisches Transaktionsverfahren unter Verwendung eines ID-Tokens (106), der einem Nutzer (102) zugeordnet ist, wobei der ID-Token einen elektronischen Speicher (118) mit einem geschützten Speicherbereich (124) aufweist, in dem ein oder mehrere Attribute gespeichert sind, wobei ein Zugriff auf den geschützten Speicherbereich nur über einen Prozessor (128) des ID-Tokens möglich ist, und wobei der ID-Token eine Kommunikations-Schnittstelle (108) zur Kommunikation mit einem Lesegerät eines Nutzer-Computersystems (100) aufweist, mit folgenden Schritten:
- Übertragung einer Transaktionsanforderung (158) von dem Nutzer-Computersystem an ein Dienst-Computersystem (150) über ein Netzwerk (116),
- Übertragung eines Request (166) von dem Dienst-Computersystem über das Nutzer-Computersystems (100) an ein ID-Provider-Computersystem (136), wobei die Übertraung über das Netzwerk erfolgt, wobei der Request eine Attributspezifikation, der aus dem ID-Token für die Durchführung der Transaktion auszulesenden Attribute beinhaltet,
- Erzeugung eines Chiffrats von für die Durchführung der Transaktion erforderlichen Transaktionsdaten mit Hilfe einer Einwegfunktion und Übertragung des Chiffrats an das ID-Provider-Computersystem über das Netzwerk,
- Authentifizierung des Nutzers gegenüber dem ID-Token,
- Authentifizierung des ID-Provider-Computersystems gegenüber dem ID-Token über das Netzwerk,
- Übertragung des Chiffrats der Transaktionsdaten von dem ID-Provider-Computersystem an das Nutzer-Computersystem und Prüfung, ob das Chiffrat mit den Transaktionsdaten übereinstimmt,
- unter der Voraussetzung der erfolgreichen Authentifizierung des Nutzers und des ID-Provider-Computersystems gegenüber dem ID-Token sowie der weiteren Voraussetzung der Übereinstimmung des Chiffrats und der Transaktionsdaten, Auslesen des oder der Attribute gemäß der Attributspezifikation durch das ID-Provider-Computersystem aus dem ID-Token über das Netzwerk mit Ende-zu-Ende-Verschlüsselung,
- Übertragung einer Response (174) von dem ID-Provider-Computersystem über das Nutzer-Computersystem an das Dienst-Computersystem, wobei die Übertragung der Response über das Netzwerk erfolgt, wobei die Response das oder die ausgelesenen Attribute beinhaltet, und wobei die Response von dem ID-Provider-Computersystem signiert ist,
- Durchführung der Transaktion mithilfe der Transaktionsdaten und des oder der Attribute durch das Dienst-Computersystem.

2. Verfahren nach Anspruch 1, wobei das Chiffrat der Transaktionsdaten von dem Dienst-Computersystem erzeugt wird und das Chiffrat der Transaktionsdaten als Teil des Requests von dem Dienst-Computersystem an das ID-Provider-Computersystem über das Netzwerk übertragen wird, wobei der Request von dem Dienst-Computersystem signiert ist.

3. Verfahren nach Anspruch 1 oder 2, wobei die Prüfung, ob das Chiffrat mit den Transaktionsdaten übereinstimmt, durch das Nutzer-Computersystem durchgeführt wird.

4. Verfahren nach Anspruch 1 oder 2, wobei das Nutzer-Computersystem die Transaktionsdaten an das Lesegerät überträgt, und die Prüfung, ob das Chiffrat mit den Transaktionsdaten übereinstimmt, durch das Lesegerät durchgeführt wird.

5. Verfahren nach Anspruch 1 oder 2, wobei das Nutzer-Computersystem die Transaktionsdaten über das Lesegerät an den ID-Token überträgt, und der ID-Token die Prüfung, ob das Chiffrat mit den Transaktionsdaten übereinstimmt, vornimmt, wobei der ID-Token das Chiffrat beispielsweise über die vierte Session von dem ID-Provider-Computersystem empfängt.

6. Verfahren nach einem der vorhergehenden Ansprüche, mit folgenden Schritten
- Aufbau einer ersten Session (201) zwischen einem Anwendungsprogramm (112), insbesondere einem Internetbrowser des Nutzer-Computersystems und einem Dienst-Computersystem (150) über ein Netzwerk (116),
- Empfang der Transaktionsanforderung (158) über die erste Session durch das Dienst-Computersystem von dem Anwendungsprogramm (112),
- Erzeugung des Request (166) durch das Dienst-Computersystem aufgrund des Empfangs der Transaktionsanforderung, wobei der Request von dem Dienst-Computersystem signiert wird und der Request eine Attributspezifikation, der aus dem ID-Token für die Durchführung der Transaktion auszulesenden Attribute, Transaktionsdaten zur Spezifizierung der Transaktion, eine Kennung (180) des Request, eine URL eines ID-Provider-Computersystems und eine URL des Dienst-Computersystems beinhaltet,
- Aufbau einer zweiten Session zwischen dem Internetbrowser und dem ID-Provider-Computersystem über das Netzwerk mithilfe der URL des ID-Provider-Computersystems, wobei die zweite Session mit einem gesicherten Transportlayer aufgebaut wird,
- Weiterleitung des SAML-Request und eines Chiffrats der Transaktionsdaten von dem Internetbrowser an das ID-Provider-Computersystem über die zweite Session, wobei das Chiffrat durch eine Einwegfunktion aus den Transaktionsdaten abgeleitet wird,
- Aufbau der dritten Session zwischen einem Programm des Nutzer-Computersystems und dem ID-Provider-Computersystem über den gesicherten Transportlayer der zweiten Session, wobei das Programm von dem Internetbrowser verschieden ist,
- Übertragung zumindest eines Zertifikats des ID-Provider-Computersystems an das Programm, wobei das Zertifikat eine Angabe von Leserechten des ID-Provider-Computersystems zum Lesen von einem oder mehreren der in dem ID-Token gespeicherten Attribute beinhaltet, wobei die Übertragung des Zertifikats über die dritte Session erfolgt,
- Prüfung durch das Programm, ob die in dem Zertifikat angegebenen Leserechte ausreichend sind, um einen Lesezugriff des ID-Provider-Computersystems auf das oder die gemäß der Attributspezifikation zu lesenden Attribute zu zulassen, und nur wenn die Leserechte ausreichend sind:
a) Aufbau einer lokalen Verbindung (176) zwischen dem Lesegerät des Nutzer-Computersystems und dem ID-Token,
b) Authentifizierung des Nutzers gegenüber dem ID-Token, wobei ein Session-Key vereinbart wird,
c) Aufbau einer vierten Session (204) zwischen dem ID-Token und dem ID-Provider-Computersystem über die lokale Verbindung und die dritte Session mit einer Ende-zu-Ende Verschlüsselung mithilfe des Session-Key,
d) Gegenseitige Authentifizierung des ID-Tokens und des ID-Provider-Computersystems über die vierte Session,
e) Auslesen des oder der Attribute gemäß der Attributspezifikation durch das ID-Provider-Computersystem über die vierte Session aus dem ID-Token.
- Erzeugung einer Response (174), die das oder die ausgelesenen Attribute und zumindest die Kennung (180) des Request beinhaltet, und die von dem ID-Provider-Computersystem signiert wird,
- Speicherung der Response zum Abrufen mit Hilfe der logischen Adresse,
- Lesen der Response von dem ID-Provider-Computersystem durch das Nutzer-Computersystem durch Abruf der Response mittels eines Lesekommandos von der logischen Adresse über das Netzwerk,
- Weiterleitung der Response durch das Nutzer-Computersystem über die erste Session an das Dienst-Computersystem,
- Zuordnung der Response zu dem Request mit Hilfe der Kennung, die in der Response beinhaltet ist, durch das Dienst-Computersystem,
- Durchführung der Transaktion mithilfe der Response durch das ID-Provider-Computersystem.

7. Verfahren nach Anspruch 6, wobei es sich bei dem Anwendungsprogramm um einen Internetbrowser handelt, und das weitere Programm ein Plug-in des Internetbrowsers ist, wobei das Plug-in in einer Registry eines Betriebssystems des Nutzer-Computersystems mit einer Plug-in-Kennung (184) registriert ist, wobei die Nachricht von dem ID-Provider-Computersystem an den Internetbrowser die Plug-in-Kennung beinhaltet, sodass das Plug-in aufgrund des Empfangs der Nachricht gestartet wird.

8. Verfahren nach Anspruch 6, wobei es sich bei dem Programm um ein weiteres Anwendungsprogramm handelt, welches von dem Internetbrowser durch einen Aufruf einer lokalen URL gestartet werden kann, wobei die lokale URL eine fest vorgegebene Portnummer gemäß dem TCP-Protokoll beinhaltet, wobei die lokale URL zusammen mit der Webseite von dem Dienst-Computersystem an das Nutzer-Computersystem übertragen wird, um das Starten des weiteren Anwendungsprogramms mithilfe der lokalen URL durch den Internetbrowser zu bewirken.

9. Verfahren nach Anspruch 6, 7 oder 8, wobei es sich bei der Zusatzinformation um eine Bezahlinformation des Nutzers, insbesondere eine Kontoverbindung oder Kreditkarteninformation, handelt.

10. Verfahren nach Anspruch 9, wobei die Zusatzinformation durch das Nutzer-Computersystem mithilfe des öffentlichen Schlüssels des Dienst-Computersystems verschlüsselt wird und nur die verschlüsselte Zusatzinformation an das ID-Provider-Computersystem über die zweite Session weitergeleitet wird, wobei die verschlüsselte Zusatzinformation in die Response eingeht und die verschlüsselte Zusatzinformation nach Empfang der Response durch das Dienst-Computersystem mithilfe des privaten Schlüssels des Dienst-Computersystems entschlüsselt wird.

11. Verfahren nach einem der vorhergehenden Ansprüche, wobei die Transaktionsdaten eine Bezahlinformation des Dienst-Computersystems, wie zum Beispiel eine Kontoverbindung und einen Zahlungsbetrag, beinhaltet und wobei die Zusatzinformation eine Bezahlinformation des Nutzers, wie zum Beispiel eine Kontoverbindung oder Kreditkarteninformationen des Nutzers, beinhaltet..

12. Verfahren nach einem der vorhergehenden Ansprüche, mit folgenden weiteren Schritten:
- Anzeige eines optisch lesbaren Musters auf einem Bildschirm (188) eines Terminals (186), wobei in dem optisch lesbaren Muster eine Information codiert ist, die zumindest eine URL des Dienst-Computersystems und einen Zahlbetrag beinhaltet,
- Erfassung des Musters mithilfe eines optischen Sensors (190) des Nutzer-Computersystems und Decodierung des Musters,
- Aufruf der URL des Dienst-Computersystems, welche über das Muster erfasst wurde, zum Aufbau der ersten Session,
wobei über die erste Session der Zahlbetrag mit der Transaktionsanforderung (158) an das Dienst-Computersystem übermittelt wird.

13. Verfahren nach Anspruch 12, wobei es sich bei dem Terminal um einen Automat, insbesondere um einen Bankautomat oder einen Verkaufsautomat, handelt, wobei der Nutzer eine Anforderung in den Automat eingibt, woraufhin der Automat das Muster anzeigt, und wobei das Dienst-Computersystem dem Automat die Durchführung der Transaktion signalisiert, woraufhin der Automat die von dem Nutzer eingegebene Anforderung erfüllt.

14. Verfahren nach Anspruch 12 oder 13, wobei es sich bei dem Terminal um ein mobiles Telekommunikationsgerät mit einer Gebührenerfassungsfunktion handelt, wobei das Telekommunikationsgerät das Muster mit einem von der Gebührenerfassungsfunktion erfassten Zahlbetrag anzeigt, wobei das Dienst-Computersystem die Durchführung der Transaktion dem Telekommunikationsgerät über ein Mobilfunknetz signalisiert.

15. Verfahren nach Anspruch 12, 13 oder 14, wobei es sich bei dem Muster um einen eindimensionalen, zweidimensionalen, High Capacity Color Barcode, Maxicode, QR-Code oder Data Matrix-Code oder eine zeitliche Reihenfolge mehrerer solcher Codes handelt.

16. Verfahren nach einem der vorhergehenden Ansprüche, wobei es sich bei dem ID-Token um ein Wert- oder Sicherheitsdokument handelt, das heißt insbesondere ein Ausweisdokument, das heißt ein ID-Dokument, insbesondere einen elektronischen Personalausweis, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle.

17. Verfahren nach einem der vorhergehenden Ansprüche, wobei die Response auch die Zusatzinformationen beinhaltet.

18. Verfahren nach Anspruch 17, wobei die Zusatzinformation ein OTP beinhaltet und das Dienst-Computersystem (150) die Validität des OTP prüft, wobei die Transaktion nur durchgeführt wird, wenn das OTP valide ist.

19. Computersystem mit einem Dienst-Computersystem (150), einem Nutzer-Computersystem (100) einem ID-Provider-Computersystem (136) und einem ID-Token (106), der einem Nutzer (102) zugeordnet ist, wobei der ID-Token einen elektronischen Speicher (118) mit einem geschützten Speicherbereich (124) aufweist, in dem ein oder mehrere Attribute gespeichert sind, wobei ein Zugriff auf den geschützten Speicherbereich nur über einen Prozessor (128) des ID-Tokens möglich ist, und wobei der ID-Token eine Kommunikations-Schnittstelle (108) zur Kommunikation mit einem Lesegerät eines Nutzer-Computersystems (100) aufweist,
wobei das Dienst-Computersystem, das Nutzer-Computersystem, das ID-Provider-Computersystem und der ID-Token zur Durchführung der folgenden Schritte ausgebildet sind:
- Übertragung einer Transaktionsanforderung (158) von dem Nutzer-Computersystem an ein Dienst-Computersystem (150) über ein Netzwerk (116),
- Übertragung eines Request (166) von dem Dienst-Computersystem über das Nutzer-Computersystems (100) an ein ID-Provider-Computersystem (136), wobei die Übertraung über das Netzwerk erfolgt, wobei der Request eine Attributspezifikation, der aus dem ID-Token für die Durchführung der Transaktion auszulesenden Attribute beinhaltet,
- Erzeugung eines Chiffrats von für die Durchführung der Transaktion erforderlichen Transaktionsdaten mit Hilfe einer Einwegfunktion und Übertragung des Chiffrats an das ID-Provider-Computersystem über das Netzwerk,
- Authentifizierung des Nutzers gegenüber dem ID-Token,
- Authentifizierung des ID-Provider-Computersystems gegenüber dem ID-Token über das Netzwerk,
- Übertragung des Chiffrats der Transaktionsdaten von dem ID-Provider-Computersystem an das Nutzer-Computersystem und Prüfung, ob das Chiffrat mit den Transaktionsdaten übereinstimmt,
- unter der Voraussetzung der erfolgreichen Authentifizierung des Nutzers und des ID-Provider-Computersystems gegenüber dem ID-Token sowie der weiteren Voraussetzung der Übereinstimmung des Chiffrats und der Transaktionsdaten, Auslesen des oder der Attribute gemäß der Attributspezifikation durch das ID-Provider-Computersystem aus dem ID-Token über das Netzwerk mit Ende-zu-Ende-Verschlüsselung,
- Übertragung einer Response (174) von dem ID-Provider-Computersystem über das Nutzer-Computersystem an das Dienst-Computersystem, wobei die Übertragung der Response über das Netzwerk erfolgt" wobei die Response das oder die ausgelesenen Attribute beinhaltet, und wobei die Response von dem ID-Provider-Computersystem signiert ist,
- Durchführung der Transaktion mithilfe der Transaktionsdaten und des oder der Attribute durch das Dienst-Computersystem.

## Claims

1. An electronic transaction method with use of an ID token (106) associated with a user (102), wherein the ID token comprises an electronic memory (118) with a protected memory area (124), in which one or more attributes are stored, wherein access to the protected memory area is possible only via a processor (128) of the ID token, and wherein the ID token comprises a communications interface (108) for communicating with a reader of a user computer system (100), the method comprising the following steps:
- transmitting a transaction demand (158) from the user computer system to a service computer system (150) via a network (116),
- transmitting a request (166) from the service computer system via the user computer system (100) to an ID provider computer system (136), wherein the transmission is performed via the network, wherein the request contains an attribute specification containing attributes that are to be read from the ID token in order to execute the transaction,
- generating a cipher of transaction data necessary for execution of the transaction with the aid of a one-way function and transmitting the cipher to the ID provider computer system via the network,
- authenticating the user to the ID token,
- authenticating the ID provider computer system to the ID token via the network,
- transmitting the cipher of the transaction data from the ID provider computer system to the user computer system and checking whether the cipher matches the transaction data,
- on the condition of successful authentication of the user and the ID provider computer system to the ID token and on the further condition of the cipher matching the transaction data, reading of the one or more attributes according to the attribute specification by the ID provider computer system from the ID token via the network with end-to-end encryption,
- transmitting a response (174) from the ID provider computer system via the user computer system to the service computer system, wherein the response is transmitted via the network, wherein the response contains the one or more read attributes, and wherein the response is signed by the ID provider computer system,
- execution of the transaction with the aid of the transaction data and the one or more attributes by the service computer system.

2. The method according to claim 1, wherein the cipher of the transaction data is generated by the service computer system and the cipher of the transaction data is transmitted as part of the request from the service computer system to the ID provider computer system via the network, wherein the request is signed by the service computer system.

3. The method according to claim 1 or 2, wherein the check to ascertain whether the cipher matches the transaction data is performed by the user computer system.

4. The method according to claim 1 or 2, wherein the user computer system transmits the transaction data to the reader, and the check to ascertain whether the cipher matches the transaction data is performed by the reader.

5. The method according to claim 1 or 2, wherein the user computer system transmits the transaction data via the reader to the ID token, and the ID token performs the check to ascertain whether the cipher matches the transaction data, wherein the ID token receives the cipher from the ID provider computer system for example via the fourth session.

6. The method according to any one of the preceding claims, comprising the following steps:
- setting up a first session (201) between an application program (112), in particular an Internet browser of the user computer system and a service computer system (150) via a network (116),
- receipt of the transaction demand (158) by the service computer system from the application program (112) via the first session,
- generation of the request (166) by the service computer system on account of the receipt of the transaction demand, wherein the request is signed by the service computer system and the request contains an attribute specification containing attributes that are to be read from the ID token in order to execute the transaction, transaction data for specifying the transaction, an identifier (180) of the request, a URL of an ID provider computer system, and a URL of the service computer system,
- setting up a second session between the Internet browser and the ID provider computer system via the network with the aid of the URL of the ID provider computer system, wherein the second session is set up with a secured transport layer,
- forwarding the SAML request and a cipher of the transaction data from the Internet browser to the ID provider computer system via the second session, wherein the cipher is derived from the transaction data by a one-way function,
- setting up the third session between a program of the user computer system and the ID provider computer system via the secured transport layer of the second session, wherein the program is different from the Internet browser,
- transmitting at least one certificate of the ID provider computer system to the program, wherein the certificate contains a specification of read rights of the ID provider computer system for reading one or more of the attributes stored in the ID token, wherein the certificate is transmitted via the third session,
- checking, by the program, whether the read rights specified in the certificate are sufficient to grant read access of the ID provider computer system to the one or more attributes that are to be read according to the attribute specification, wherein the following steps are performed only if the read rights are sufficient:
a) setting up a local connection (176) between the reader of the user computer system and the ID token,
b) authenticating the user to the ID token, wherein a session key is agreed,
c) setting up a fourth session (204) between the ID token and the ID provider computer system via the local connection and the third session with end-to-end encryption with the aid of the session key,
d) mutual authentication of the ID token and of the ID provider computer system via the fourth session,
e) reading of the one or more attributes according to the attribute specification by the ID provider computer system from the ID token via the fourth session,
- producing a response (174), which contains the one or more read attributes and at least the identifier (180) of the request, and which is signed by the ID provider computer system
- storing the response such that it may be called up with the aid of the logical address,
- reading of the response from the ID provider computer system by the user computer system by calling up the response by means of a read command from the logical address via the network,
- forwarding of the response by the computer system via the first session to the service computer system,
- assignment of the response to the request by the service computer system with the aid of the identifier which is contained in the response,
- execution of the transaction with the aid of the response by the ID provider computer system.

7. The method according to claim 6, wherein the application program is an Internet browser and the further program is a plug-in of the Internet browser, wherein the plug-in is registered with a plug-in identifier (184) in a registry of an operating system of the user computer system, wherein the message from the ID provider computer system to the Internet browser contains the plug-in identifier, such that the plug-in is started on account of the receipt of the message.

8. The method according to claim 6, wherein the program is a further application program which may be started by the Internet browser by calling up a local URL, wherein the local URL contains a fixedly defined port number according to the TCP protocol, wherein the local URL together with the web page is transmitted from the service computer system to the user computer system in order to start the further application program with the aid of the local URL by the Internet browser.

9. The method according to claim 6, 7 or 8, wherein the additional information is payment information of the user, in particular a bank account or credit card information.

10. The method according to claim 9, wherein the additional information is encrypted by the user computer system with the aid of the public key of the service computer system and only the encrypted additional information is forwarded to the ID provider computer system via the second session, wherein the encrypted additional information is included in the response and the encrypted additional information is decrypted with the aid of the private key of the service computer system following receipt of the response by the service computer system.

11. The method according to any one of the preceding claims, wherein the transaction data includes payment information of the service computer system, for example a bank account and a payment amount, and wherein the additional information includes payment information of the user, for example a bank account or credit card information of the user.

12. The method according to any one of the preceding claims, comprising the following further steps:
- displaying an optically readable pattern on a screen (188) of a terminal (186), wherein information containing at least a URL of the service computer system and a payment amount is coded in the optically readable pattern,
- detecting the pattern with the aid of an optical sensor (190) of the user computer system and decoding the pattern,
- calling up the URL of the service computer system which was detected via the pattern in order to set up the first session,
wherein the payment amount is transmitted with the transaction demand (158) to the first service computer system via the first session.

13. The method according to claim 12, wherein the terminal is an automatic machine, in particular an ATM or a vending machine, wherein the user inputs a demand into the automatic machine, whereupon the automatic machine displays the pattern, and wherein the service computer system signals the execution of the transaction to the automatic machine, whereupon the automatic machine fulfils the demand input by the user.

14. The method according to claim 12 or 13, wherein the terminal is a mobile telecommunications device with a billing function, wherein the telecommunications device displays the pattern with a payment amount detected by the billing function, wherein the service computer system signals the execution of the transaction to the telecommunications device via a mobile communications network.

15. The method according to claim 12, 13 or 14, wherein the pattern is a one-dimensional or two-dimensional High Capacity Color Barcode, MaxiCode, QR Code or Data Matrix Code or a chronological sequence of a plurality of such codes.

16. The method according to any one of the preceding claims, wherein the ID token is a value or security document, that is to say in particular an identity document, that is to say an ID document, in particular an electronic identity card, passport, driver's licence, company identification document, or a payment means, such as a banknote, a credit card, or another proof of authority, such as an admission ticket, a consignment note, or a visa, in particular a chip card, in particular with RFID and/or NFC interface.

17. The method according to any one of the preceding claims, wherein the response also contains the additional information.

18. The method according to claim 17, wherein the additional information contains an OTP and the service computer system (150) checks the validity of the OTP, wherein the transaction is performed only if the OTP is valid.

19. A computer system comprising a service computer system (150), a user computer system (100), an ID provider computer system (136), and an ID token (106), which is assigned to a user (102), wherein the ID token has an electronic memory (118) with a protected memory area (124), in which one or more attributes are stored, wherein access to the protected memory area is possible only via a processor (128) of the ID token, and wherein the ID token has a communications interface (108) for communicating with a reader of a user computer system (100),
wherein the service computer system, the user computer system, the ID provider computer system and the ID token are configured to carry out the following steps:
- transmitting a transaction demand (158) from the user computer system to a service computer system (150) via a network (116),
- transmitting a request (166) from the service computer system via the user computer system (100) to an ID provider computer system (136), wherein the transmission is performed via the network, wherein the request contains an attribute specification containing attributes that are to be read from the ID token in order to execute the transaction,
- generating a cipher of transaction data necessary for execution of the transaction with the aid of a one-way function and transmitting the cipher to the ID provider computer system via the network,
- authenticating the user to the ID token,
- authenticating the ID provider computer system to the ID token via the network,
- transmitting the cipher of the transaction data from the ID provider computer system to the user computer system and checking whether the cipher matches the transaction data,
- on the condition of successful authentication of the user and the ID provider computer system to the ID token and on the further condition of the cipher matching the transaction data, reading of the one or more attributes according to the attribute specification by the ID provider computer system from the ID token via the network with end-to-end encryption,
- transmitting a response (174) from the ID provider computer system via the user computer system to the service computer system, wherein the response is transmitted via the network, wherein the response contains the one or more read attributes, and wherein the response is signed by the ID provider computer system,
- execution of the transaction with the aid of the transaction data and the one or more attributes by the service computer system.

## Revendications

1. Procédé de transaction électronique moyennant l'emploi d'un jeton d'ID (106) qui est associé à un utilisateur (102), le jeton d'ID présentant une mémoire électronique (118) avec une zone de mémoire (124) sécurisée, dans laquelle un ou plusieurs attributs sont stockés, où un accès à la zone de mémoire sécurisée n'est possible que par le biais d'un processeur (128) du jeton d'ID, et où le jeton d'ID présente une interface de communication (108) pour la communication avec un lecteur d'un système informatique d'utilisateur (100), avec les étapes suivantes :
- de transmission d'une demande de transaction (158) du système informatique d'utilisateur à un système informatique de service (150) par le biais d'un réseau (116),
- de transmission d'une requête (166) du système informatique de service à un système informatique de fournisseur d'ID (136) par le biais du système informatique d'utilisateur (100), la transmission ayant lieu par le biais du réseau, où la requête contient une spécification d'attribut des attributs lisibles à partir du jeton d'ID pour l'exécution de la transaction,
- de création d'un élément chiffré des données de transaction nécessaires pour l'exécution de la transaction à l'aide d'une fonction à sens unique et de transmission de l'élément chiffré au système informatique de fournisseur d'ID par le biais du réseau,
- d'authentification de l'utilisateur vis-à-vis du jeton d'ID,
- d'authentification du système informatique de fournisseur d'ID vis-à-vis du jeton d'ID par le biais du réseau,
- de transmission de l'élément chiffré des données de transaction du système informatique de fournisseur d'ID au système informatique d'utilisateur et de vérification si l'élément chiffré correspond avec les données de transaction,
- moyennant la condition d'une authentification réussie de l'utilisateur et du système informatique de fournisseur d'ID vis-à-vis du jeton d'ID ainsi que la condition subséquente de la concordance de l'élément chiffré et des données de transaction, de lecture de l'attribut ou des attributs selon la spécification d'attribut par le système informatique de fournisseur d'ID à partir du jeton d'ID par le biais du réseau avec un chiffrement de bout en bout,
- de transmission d'une réponse (174) du système informatique de fournisseur d'ID au système informatique de service par le biais du système informatique d'utilisateur, la transmission de la réponse ayant lieu par le biais du réseau, où la réponse contient l'attribut ou les attributs lus et où la réponse est signée par le système informatique de fournisseur d'ID,
- d'exécution de la transaction à l'aide des données de transaction et de l'attribut ou des attributs par le système informatique de service.

2. Procédé selon la revendication 1, dans lequel l'élément chiffré des données de transaction est créé par le système informatique de service et l'élément chiffré des données de transaction est transmis au système informatique de fournisseur d'ID sous forme d'une partie de la requête par le biais du réseau, où la requête est signée par le système informatique de service.

3. Procédé selon la revendication 1 ou la revendication 2, dans lequel la vérification si l'élément chiffré correspond aux données de transaction est effectuée par le système informatique d'utilisateur.

4. Procédé selon la revendication 1 ou la revendication 2, dans lequel le système informatique d'utilisateur transmet les données de transaction au lecteur, et la vérification si l'élément chiffré correspond aux données de transaction est exécutée par le lecteur.

5. Procédé selon la revendication 1 ou la revendication 2, dans lequel le système informatique d'utilisateur transmet les données de transaction au jeton d'ID par le biais du lecteur et le jeton d'ID effectue la vérification si l'élément chiffré correspond aux données de transaction, où le jeton d'ID réceptionne l'élément chiffré du système informatique de fournisseur d'ID, par exemple, par le biais de la quatrième session.

6. Procédé selon l'une des revendications précédentes, avec les étapes suivantes
- d'établissement d'une première session (201) entre un programme d'application (112), notamment un navigateur internet du système informatique d'utilisateur, et un système informatique de service (150) par le biais d'un réseau (116),
- de réception de la demande de transaction (158) par le système informatique de service du programme d'application (112) par le biais de la première session,
- de création de la requête (166) par le système informatique de service en raison de la réception de la demande de transaction, où la requête est signée par le système informatique de service et la requête contient une spécification d'attribut des attributs à lire à partir du jeton d'ID pour l'exécution de la transaction, des données de transaction pour la spécification de la transaction, un identifiant (180) de la requête, un URL d'un système informatique de fournisseur d'ID et un URL du système informatique de service,
- d'établissement d'une deuxième session entre le navigateur internet et le système informatique de fournisseur d'ID par le biais du réseau à l'aide de l'URL du système informatique de fournisseur d'ID, où la deuxième session est établie avec une couche de transport sécurisée,
- de transmission ultérieure d'une requête SAML et d'un élément chiffré des données de transaction du navigateur internet au système informatique de fournisseur d'ID par le biais de la deuxième session, où l'élément chiffré est dérivé des données de transaction par une fonction à sens unique,
- d'établissement de la troisième session entre un programme du système informatique d'utilisateur et le système informatique de fournisseur d'ID par le biais d'une couche de transport sécurisée de la deuxième session, où le programme est différent du navigateur internet,
- de transmission d'au moins un certificat du système informatique de fournisseur d'ID au programme, où le certificat contient une indication de droits de lecture du système informatique de fournisseur d'ID pour la lecture d'un ou de plusieurs attributs stockés dans le jeton d'ID, où la transmission du certificat a lieu par le biais de la troisième session,
- de vérification, par le programme, si les droits de lecture indiqués dans le certificat sont suffisants pour permettre un accès en lecture du système informatique de fournisseur d'ID de l'attribut ou des attributs à lire selon la spécification d'attribut et uniquement si les droits de lecture sont suffisants :
a) d'établissement d'une connexion locale (176) entre le lecteur du système informatique d'utilisateur et le jeton d'ID,
b) d'authentification de l'utilisateur vis-à-vis du jeton d'ID, où une clé de session est convenue,
c) d'établissement d'une quatrième session (204) entre le jeton d'ID et le système informatique de fournisseur d'ID par le biais de la connexion locale et de la troisième session avec un chiffrement de bout en bout à l'aide de la clé de session,
d) d'authentification de manière réciproque du jeton d'ID et du système informatique de fournisseur d'ID par le biais de la quatrième session,
e) de lecture de l'attribut ou des attributs selon la spécification d'attribut par le système informatique de fournisseur d'ID à partir du jeton d'ID par le biais de la quatrième session,
- de création d'une réponse (174) qui contient l'attribut ou les attributs à lire et au moins l'identifiant (180) de la requête et qui est signée par le système informatique de fournisseur d'ID,
- de stockage de la réponse pour la consultation à l'aide de l'adresse logique,
- de lecture de la réponse du système informatique de fournisseur d'ID par le système informatique d'utilisateur par la consultation de la réponse au moyen d'une commande de lecture de l'adresse logique par le biais du réseau,
- de transmission ultérieure de la réponse au système informatique de service par le système informatique d'utilisateur par le biais de la première session,
- d'association de la réponse à la requête à l'aide de l'identifiant qui contient la réponse par le système informatique de service,
- d'exécution de la transaction à l'aide de la réponse par le système informatique de fournisseur d'ID.

7. Procédé selon la revendication 6, dans lequel, dans le cas du programme d'application, il s'agit d'un navigateur internet, et l'autre programme est un Plug-in du navigateur internet, où le Plug-in est enregistré dans un registre d'un système d'exploitation du système informatique d'utilisateur avec un identifiant de Plug-in (184), où l'information du système informatique de fournisseur d'ID au navigateur internet contient l'identifiant de Plug-in de sorte que le Plug-in est démarré du fait de la réception de l'information.

8. Procédé selon la revendication 6, dans lequel, dans le cas du programme, il s'agit d'un autre programme d'application, lequel peut être démarré par le navigateur internet par une activation d'un URL local, où l'URL local contient un numéro de port bien prédéterminé selon le protocole TCP, où l'URL local est transmis conjointement avec la page web du système informatique de service au système informatique d'utilisateur afin de provoquer le démarrage de l'autre programme d'application à l'aide de l'URL local par le navigateur internet.

9. Procédé selon la revendication 6, la revendication 7 ou la revendication 8, dans lequel, dans le cas de l'information complémentaire, il s'agit d'une information relative au paiement de l'utilisateur, notamment d'un compte en banque ou d'une information concernant une carte de crédit.

10. Procédé selon la revendication 9, dans lequel l'information complémentaire est chiffrée par le système informatique d'utilisateur à l'aide de la clé publique du système informatique de service et uniquement l'information complémentaire chiffrée est transmise ultérieurement au système informatique de fournisseur d'ID par le biais de la deuxième session, où l'information complémentaire chiffrée est acceptée dans la réponse et l'information complémentaire chiffrée est déchiffrée après la réception de la réponse par le système informatique de service à l'aide de la clé privée du système informatique de service.

11. Procédé selon l'une des revendications précédentes, dans lequel les données de transaction contiennent une information relative au paiement du système informatique de service, comme, par exemple, un compte en banque et un versement et où l'information complémentaire contient une information relative au paiement de l'utilisateur, comme, par exemple, un compte en banque ou une information concernant une carte de crédit de l'utilisateur.

12. Procédé selon l'une des revendications précédentes, avec les autres étapes suivantes :
- d'indication d'un motif lisible optiquement sur l'écran (188) d'un terminal (186), où une information est codée dans le motif lisible optiquement, qui contient au moins un URL du système informatique de service et un montant de paiement,
- de saisie du motif à l'aide d'un capteur optique (190) du système informatique d'utilisateur et de décodage du motif,
- d'activation de l'URL du système informatique de service, lequel a été détecté par le biais du motif pour l'établissement de la première session,
où le montant de paiement est transmis avec la demande de transaction (158) au système informatique de service par le biais de la première session.

13. Procédé selon la revendication 12, dans lequel, dans le cas du terminal, il s'agit d'un automate, notamment d'un automate bancaire ou d'un automate de vente, où l'utilisateur indique une demande dans l'automate, à la suite de laquelle l'automate indique le motif, et où le système informatique de service signale l'exécution de la transaction à l'automate, à la suite de quoi, l'automate répond à la demande indiquée par l'utilisateur.

14. Procédé selon la revendication 12 ou la revendication 14, dans lequel, dans le cas du terminal, il s'agit d'un appareil de télécommunications mobile avec une fonction de détection de péage, où l'appareil de télécommunication indique le motif avec un montant de paiement saisi par la fonction de détection de péage , où le système informatique de service signale l'exécution de la transaction à l'appareil de télécommunication par le biais d'un réseau mobile.

15. Procédé selon la revendication 12, la revendication 13 ou la revendication 14, dans lequel, dans le cas du motif, il s'agit d'un code unidimensionnel, bidimensionnel, d'un code-barres de couleur High Capacity, d'un maxi code, d'un code QR ou d'un code Data Matrix ou d'une suite temporelle de plusieurs tels codes.

16. Procédé selon l'une des revendications précédentes, dans lequel, dans le cas du jeton d'ID, il s'agit d'un document de valeur ou de sécurité, ceci signifie notamment un document d'identité, c'est-à-dire un document d'ID, notamment une carte d'identité personnelle électronique, un passeport, un permis de conduire, une carte d'identité d'entreprise ou un moyen de paiement, comme, par exemple, un billet de banque, une carte de crédit ou une autre carte d'autorisation, comme, par exemple, une carte d'entrée, un connaissement ou un visa, en particulier, une carte à puce, dotée notamment d'une interface RFID et/ou NFC.

17. Procédé selon l'une des revendications précédentes, dans lequel la réponse contient également une information complémentaire.

18. Procédé selon la revendication 17, dans lequel l'information complémentaire contient un mot de passe à usage unique et le système informatique de service (150) vérifie la validité du mot de passe à usage unique, la transaction n'étant effectuée que si le mot de passe à usage unique est valide.

19. Système informatique doté d'un système informatique de service (150), d'un système informatique d'utilisateur (100), d'un système informatique de fournisseur d'ID (136) et d'un jeton d'ID (106) qui est associé à un utilisateur (102), où le jeton d'ID présente une mémoire électronique (118) avec une zone de mémoire sécurisée (124) dans laquelle un ou plusieurs attributs sont stockés, où un accès à la zone de mémoire sécurisée n'est possible que par le biais d'un processeur (128) du jeton d'ID, et où le jeton d'ID présente une interface de communication (108) pour la communication avec un lecteur d'un système informatique d'utilisateur (100),
dans lequel le système informatique de service, le système informatique d'utilisateur, le système informatique de fournisseur d'ID et le jeton d'ID sont conçus pour l'exécution des étapes suivantes :
- la transmission d'une demande de transaction (158) du système informatique d'utilisateur à un système informatique de service (150) par le biais d'un réseau (116),
- la transmission d'une requête (166) du système informatique de service à un système informatique de fournisseur d'ID (136) par le biais du système informatique d'utilisateur (100), la transmission ayant lieu par le biais du réseau, la requête contenant une spécification d'attribut des attributs lisibles à partir du jeton d'ID pour l'exécution de la transaction,
- la création d'un élément chiffré des données de transaction nécessaires pour l'exécution de la transaction à l'aide d'une fonction à sens unique et la transmission de l'élément chiffré au système informatique de fournisseur d'ID par le biais du réseau,
- l'authentification de l'utilisateur vis-à-vis du jeton d'ID,
- l'authentification du système informatique de fournisseur d'ID vis-à-vis du jeton d'ID par le biais du réseau,
- la transmission de l'élément chiffré des données de transaction du système informatique de fournisseur d'ID au système informatique d'utilisateur et la vérification si l'élément chiffré correspond avec les données de transaction,
- moyennant la condition d'une authentification réussie de l'utilisateur et du système informatique de fournisseur d'ID vis-à-vis du jeton d'ID ainsi que la condition ultérieure de la concordance de l'élément chiffré et des données de transaction, la lecture de l'attribut ou des attributs selon la spécification d'attribut par le système informatique de fournisseur d'ID à partir du jeton d'ID par le biais du réseau avec un chiffrement de bout en bout,
- la transmission d'une réponse (174) du système informatique de fournisseur d'ID au système informatique de service par le biais du système informatique d'utilisateur, la transmission de la réponse ayant lieu par le biais du réseau, la réponse contenant l'attribut ou les attributs lus et où la réponse est signée par le système informatique de fournisseur d'ID,
- l'exécution de la transaction à l'aide des données de transaction et de l'attribut ou des attributs par le système informatique de service.
